**Europäisches Patentamt**

(19) **European Patent Office**

**Office européen des brevets**

(11) Publication number : **0 061 414 B2**

(12) # NEW EUROPEAN PATENT SPECIFICATION

(45) Date of publication of the new patent specification : **06.10.93 Bulletin 93/40**

(51) Int. Cl.⁵ : **C08L 67/02**

(21) Application number : **82630017.0**

(22) Date of filing : **26.02.82**

(54) **High clarity colorless polyesters.**

(30) Priority : **20.03.81 US 245838**

(43) Date of publication of application :
**29.09.82 Bulletin 82/39**

(45) Publication of the grant of the patent :
**29.01.86 Bulletin 86/05**

(45) Mention of the opposition decision :
**06.10.93 Bulletin 93/40**

(84) Designated Contracting States :
**BE DE FR GB IT NL**

(56) References cited :
**DE-A- 3 012 692**
**DE-B- 2 265 402**
**JP-A-49 013 515**
**JP-A-53 051 295**
**JP-A-54 120 699**
**JP-A-55 015 424**
**JP-A-55 040 714**

(56) References cited :
**US-A- 3 496 146**
**CHEMICAL ABSTRACTS, vol. 88, no. 2, 9th January 1978, page 35, no. 7879u, Columbus, Ohio, USA**
**NOWAK et al., Soc. of Plast.Eng., Blow Molding Div., Ann. Tech. Conf. N.Y., May 5-8, 1980, pp. 543-548**

(73) Proprietor : **THE GOODYEAR TIRE & RUBBER COMPANY**
**1144 East Market Street**
**Akron, Ohio 44316-0001 (US)**

(72) Inventor : **Callander, Douglas David**
**590 San Moritz Drive**
**Akron Ohio 44313 (US)**
Inventor : **Massey, Fred Lee**
**2646 Foxfire Street, Northwest**
**Uniontown Ohio 44685 (US)**

(74) Representative : **Müller-Boré & Partner Patentanwälte**
**Isartorplatz 6 Postfach 26 02 47**
**D-80059 München (DE)**

EP 0 061 414 B2

## Description

Technical field

The present invention relates to a polyester which has a high clarity, and is transparent when made into an article. The article has a neutral color hue, a low haze value, and no greyness therein.

Background art

Heretofore, numerous compounds and catalysts have been used for the preparation of polyester resins. However, high clarity, neutral hue, and low haze polyester articles such as films, sheets, containers, and the like are desirable, especially for containing food or drink, or when replacing glass. Often, antimony has been used as a catalyst, at times in combination with a phosphite compound. However, the reaction between these two compounds would often result in some amount of antimony metal being formed which imparted a gray color to the resin and article formed therefrom. Moreover, if other catalysts were utilized, a high level of acetaldehyde was produced which is highly undesirable for use in connection with food containers.

U.S. Patent 3,795,639 to Chimura, et al relates to a process for preparing linear polyesters wherein the polycondensation of glycol terephthalate is preformed in the presence of (1) an antimony catalyst, (2) a germanium compound and (3) a phosphoric ester. This patent is not pertinent in that it does not utilize a bluing agent and does utilize a germanium compound.

U.S. Patent 3,732,182, to Chimura, et al is not pertinent in that it relates to a novel antimony compound having the formula $Sb(OR_1)(OR_2)(OR_3)$.

U.S. Patent 3,965,071 to McClelland relates to the preparation of polyesters in the presence of a titanium compound, the deactivation of a catalyst by reaction with phosphoric acid or ester and polycondensation in the presence of an antimony compound. Thus this patent relates to a completely different catalyst system as well as to a deactivation of the titanium catalyst.

U.S. Patent 3,842,043 relates to a white, transparent polyester utilizing a polycondensation catalyst solution containing germanium dioxide, glycol and a solubilizing agent such as calcium, magnesium, strontium and zinc metals or salts thereof. Hence, it is not pertinent.

U.S. Patent 4,082,724 to Hewertson relates to polyesters containing a trihalide or a tri (pseudohalide) of antimony and an organic oxo compound of phosphorus. The mole ratio of the oxo phosphorus compound to antimony is generally in excess of 1.0. This patent is not pertinent in that it uses very high amounts of phosphorus compounds and does not utilize a bluing agent.

An article of Unitika Co., Plasdoc 31808 V/17 Dewent Publications (April 1, 1974), obtains a polyester by polymerizing a bis(W-hydroxyalkyl)terephthalate and/or its oligomer in the presence of an antimony compound, a cobalt compound, and a halide phosphate compound. This article is not pertinent in that a halide phosphate compound is utilized and relates to making polyesters from dimethyl terephthalate.

U.S. Patent Numbers 3,962,189 to Russin et al, 3,907,754 to Tershansy et al, and 4,010,145 to Russin et al are all very similar in that they relate to catalyst inhibitor systems having a combination of organic or inorganic salts of manganese and cobalt, titanium compounds, antimony compounds, and a phosphate ester. The amount of weight of phosphorus is greater than the total weight of cobalt, manganese, and titanium. Moreover, the examples generally show the amount of phosphorus being at least four times as much as the amount of cobalt. Thus, these references are not pertinent in that they use very high amounts of phosphate in comparison to the other metals, as well as use other components not utilized by the present invention. Moreover, they relate to making a polyester from dimethyl terephthalate and not from dicarboxylic acids. Likewise, Japanese Kokai 77 87,495 reveals such a composition which also includes a cobalt compound as a coloring agent.

U.S. Patent 2,641,592, to Hofrichter, relates to a cobalt acetate catalyst in association with antimony for the polymerization of dimethyl terephthalate. This patent is not pertinent in that it lacks any suggestion utilizing any phosphate compound. Additionally, such a composition would yield unacceptably high acetaldehyde levels in containers made therefrom.

U.S. Patent 3,028,366 to Engel et al relates to phosphate modifiers in association with antimony catalysts to produce colorless or white polyesters from dimethyl terephthalate. In passing, the patent states that other well known catalysts or catalyst combinations can also be utilized including various metals such as calcium, magnesium, lanthanum, manganese, and cobalt. Since such compounds are utilized as catalysts, high amounts thereof are required. This patent is not pertinent in that it fails to specifically teach applicant's use of a bluing agent, very small amounts of phosphate in comparison with any bluing agent as well as small amounts of the bluing agent; and relates only to the use of dimethyl terephthalate.

The above patents and articles all generally relate to the utilization of dimethyl terephthalate in preparing the polyester. Whenever various catalysts are utilized such as manganese, cobalt and the like, relatively high amounts, that is generally in excess of 70 parts per million by weight of the element must be utilized. Such compounds necessarily impart a color to the polyester, for example a blue color, and hence are inherently incapable of producing a neutral hue polyester article, that is a colorless or transparent article, with low acetaldehyde content and generation rate.

## Disclosure of invention

It is therefore an object of the present invention to provide a process for preparing a polyester resin which yields high clarity, neutral hue and low haze articles, especially containers like food containers, and particularly bottles, the polyester resin having low acetaldehyde levels.

This and other objects of the present invention will become apparent from the following description of the invention.

This invention discloses a process of preparing a polyester resin yielding an article of high clarity having a neutral hue containing an antimony compound, a phosphorus compound, and a cobalt compound by the reaction of a dicarboxylic acid and polyhydric alcohol compound, said dicarboxylic acid being selected from the group consisting of alkyl dicarboxylic acids having a total of from 2 to 16 carbon atoms, aryl or alkyl substituted aryl dicarboxylic acids containing a total of from 8 to 16 carbon atoms, and combinations thereof, and wherein said polyhydric alcohol is selected from the group consisting of glycols having from 2 to 12 carbon atoms, glycol ethers having from 4 to 12 carbon atoms, and combinations thereof, which is characterised by reacting the dicarboxylic acid with polyhydric alcohol in a solvent consisting of a preformed low molecular weight linear condensation polyester, and by adding the phosphorus compound and the cobalt compound prior to adding the antimony compound.

Calculated as elemental cobalt from about 5 parts to about 50 parts per million of produced polyester resin, calculated as elemental phosphorous about 5 to about 60 parts per million of produced polyester resin, and calculated as elemental antimony from about 70 to about 250 parts per million of produced polyester resin are used in the process of the present invention. The amount of phosphorus ranges from about 0,35 to about 2,5 parts by weight per one part of elemental cobalt. Calculated as elemental antimony about 120 to about 210 parts per weight antimony per million parts by weight of the produced polyester resin are used.

## Best mode for carrying out the invention

High clarity polyesters are produced utilizing an antimony catalyst and low amounts of phosphorus and cobalt as a bluing agent. By the term "bluing agent" as utilized in the present invention, it is meant any compound which upon addition to the polymer during preparation thereof will act as a blue colored compound or pigment and neutralize any otherwise yellow color in the polyester formed to yield a transparent, colorless or neutral hue article. In other words, the bluing agent, although often a blue colored compound, can be a red compound such as cobalt acetate, a green compound, or the like, which upon addition to the polymerization process reacts and forms a blue colored compound which neutralizes yellow and forms a transparent polyester when made into an article. The polyesters when made into articles have very high clarity, neutral hue, low haze, and low acetaldehyde levels and thus are suitable as films, sheets, or in any other form when a bright high clarity with low haze is desired. Particularly suited articles include container, especially for foods, and bottles.

The polyester resin is produced in a conventional manner but only from the reaction of dicarboxylic acids having from 2 to about 16 carbon atoms with polyhydric alchols such as glycols or diols containing from 2 to about 12 carbon atoms. The alkyl dicarboxylic acids may contain a total of from 2 to 16 carbon atoms. Preferably, the acids are aryl or an alkyl substituted aryl dicarboxylic acid containing from 8 to 16 carbon atoms. Specific examples of linear or alkyl dicarboxylic acids include oxalic acid, malonic acid, succinic acid, glutaric acid, adipic acid, pimelic acid, suberic acid, azelaic acid, and sebacic acid. Specific examples of an aryl acid include the various isomers of phthalic acid, such as paraphthalic acid (terephthalic acid) and naphthalic acid. Specific examples of alkyl substituted aryl acids include the various isomers of dimethylphthalic acid such as dimethylisophthalic acid, dimethylorthophthalic acid, dimethylterephthalic acid, the various isomers of diethylphthalic acid such as diethylisophthalic acid, diethylorthophthalic acid, diethylterephthalic acid, the various isomers of dimethylnaphthalic acid such as 2,6-dimethylnaphthalic acid and 2,5-dimethylnaphthalic acid, and the various isomers of diethylnaphthalic acid. Generally, terephthalic acid is highly preferred.

The process of the present invention does not include the production of polyesters made from diesters such as dimethylterephthalate. When such a monomer is utilized, high amounts of catalyst, that is generally the 70 parts per million of the elemental catalyst, are required in order to promote the esterification and condensation reactions. Such amounts of catalyst are in excess of the present invention and will impart a color to the polyester and articles formed therefrom. The present invention completely avoids any color hue by utilizing the dicarboxylic acids and hence, utilizes low amounts of cobalt, that is generally less than 50 parts per million, and desirably less than 30 parts per million.

The diols or glycols may be straight chained or branched. Specific examples include ethylene glycol, propylene glycol, trimethylene glycol, 1,2-butane diol, 1,3-butane diol, 1,4-butane diol, 2,3-butane diol and neopentyl glycol. Of the various glycols, those having from 2 to 8 carbon atoms are preferred with ethylene glycol and 1,4-butane diol being highly preferred. In lieu of the various glycols, another class of polyhydric alcohols, such as the glycol ethers containing from 4 to 12 carbon atoms, can be utilized as for example dimethylene glycol and 1,4-dihydroxyethoxy benzene.

The polyesters can be made according to melt polymerization, or melt and solid state polymerization. As known to those skilled in the art, polyesters are generally made in two stages. In the first stage or esterification stage, the diacid is reacted with the diol at elevated temperatures and pressures with water being produced. In the second stage or the polycondensation stage, a vacuum is gradually applied, or generally catalysts are utilized, and water and a diol are withdrawn as a condensation product. Various polyesters can be made by such a polymerization including polyethyleneterephthalate, a preferred polyester resin.

The process of the present invention is carried out by reacting the dicarboxylic acid with the diol in a solvent which is a low molecular weight linear polyester in a manner as set froth in U.S. Patent No. 4,020,049 to Rinehard. Regardless of the exact process, such reactions can be carried out in situ.

In some of these applications wherein the polyester is utilised as a container, for example, for containing carbonated beverage, it is highly desirable to maintain or to have low acetaldehyde levels to prevent discernible differences in taste. For example, the addition of levels of acetaldehyde as low as 60 parts per billion by weight have altered the tastes of carbonated cola beverages. Other food stuffs have different taste threshold levels which may be exceeded if the acetaldehyde level is not minimized. Desirably, when a container is utilized to contain food stuffs or liquids such as beverages, the amount of acetaldehyde diffusing from the container walls (e.g., a 2 liter bottle) of an empty, freshly blown bottle is less than 3 micrograms per liter. This test is conducted by maintaining the container at 70°F (27°C) for twenty-four hours, and then testing the gases content therein to determine the amount by weight of acetaldehyde. Generally it has been found that wherein the acetaldehyde content is less than 3 micrograms per liter of volume in a container within twenty-four hours after preparation thereof, any remaining accumulation of acetaldehyde is low and presents no discernible taste in a beverage, food stuff, or the like with longer periods of storage.

Since cobalt compounds have been shown to increase the acetaldehyde level in a container, an amount of a phosphate compound (including phosphoric acid) is utilized to suppress the catalytic activity of the cobalt compound. Generally, one part by weight of elemental cobalt requires approximately 0.35 parts by weight of elemental phosphorus. Preferably, a slight excess of the phosphorus compound is utilized to insure suppression of the catalytic influence of the cobalt compound on acetaldehyde production. Thus, according to the present invention, from about 0.35 to about 2.5 parts by weight and preferably from about 0.4 to about 0.6 parts by weight of elemental phosphorus is desired for every one part of elemental cobalt. Should a greater amount be utilized, free phosphate will generally exist which will react with the antimony to produce an antimony phosphate type compound and if sufficient amounts exist in excess of the solubility limit of such a compound, will form particles and/or nucleation of crystallinity upon formation of the polyester. This results in a hazed article.

The present invention as noted above relates to the articles which when formed from a polyester resin have low haze, a neutral color, and high clarity.

Desirably, from about 70 to about 250 parts by weight per million of elemental antimony is desired based upon the produced polyester resin with the preferred range being from about 120 to about 210 parts per million. The amount of cobalt ranges from about 5 parts to about 50 parts by weight per million, desirably from about 5 to about 30 parts, and preferably from about 8 parts to about 20 parts per million. The amount of the phosphate compound expressed in terms of elemental phosphorus per million parts of polyester polymer ranges from about 5 to about 60 parts, desirably from about 10 to about 50 parts, and preferably from about 8 to about 20 parts by weight. Typical cobalt coloring agents include cobalt acetate tetrahydrate, cobalt aluminate, cobalt benzoate and cobalt chloride, with cobalt acetate being preferred. Examples of typical phosphate compounds include any pentavalent phosphates such as phosphoric acid, trialkylphosphates, for example, trimethylphosphate, triethylphosphate and tripentylphosphate. Triaryl phosphates such as triphenyl phosphate, triaryl phosphate, and the like can also be utilized. Additionally, mono and dialkyl/aryl phosphates may be utilized. Phosphoric acid and the trialkyl phosphates are preferred.

Desirably, the phosphate and the cobalt compounds are added before the antimony addition, and preferably during the beginning of the esterification stage although they can be added at the beginning of the condensation stage. The preparation of the polyester resin can be conducted in any conventional manner utilizing a dicarboxylic acid. That is, conventional temperatures, pressures, reaction times, and the like are utilized as well known to those skilled in the art.

The articles made from polyester resins of the present invention exhibit very high clarity, low haze values, and neutral hue. The haze value is generally indicated by a haze number according to the Hunter haze test. The haze number is generally less than 3.0, desirably less than 2.5, and preferably less than 2.0. Often, haze values are measured by eyesight since they tend to be more accurate than the Hunter values. The neutral hue is generally indicated by utilizing a Hunter Lab instrument. Generally, the hue is neutral as indicated by an "a" coordinate value ranging from about - 1.0 to about 1.0, and preferably from about -0.5 to about 1.0, and a "b" coordinate value ranging from about -2.0 to about 2.0, and preferably from about -0.5 to about 2.0. That is, the numbers are basically on the zero-zero coordinates which indicates that the resulting article, for example a beverage bottle has no color.

The invention will be better understood by reference to the following examples.

Polyester reactor processing example

The poly(ethylene terephthalate) polyesters described in Table III were prepared in a 200 pound polyester process reactor. The materials charged to the reactor, identification, amounts and points of addition, are shown in Table IA. The processing conditions and procedures for the esterification (S/1) reaction are shown in Table IB, and the same for the polycondensation (S/2 and S/3) reactions are shown in Table IC.

TABLE I
Polyester reactor processing
0.60 dl/g±0.02 I.V. feed polymer

A. Raw materials

| Raw material | % | S/ | Amount (kg) | Amount (gms.) | Active element, ppt | |
|---|---|---|---|---|---|---|
| Terephthalic acid (TPA) | 100 | 1 | 58.6 | — | — | — |
| Ethylene glycol (EG) | 100 | 1 | 23.0 | — | — | — |
| $H_3PO_4$:EG[a] | — | 1 | — | 102.1 | P | 0.015 |
| $Co(C_2H_3O_2)_2 \cdot 4H_2O$:EG[a] | — | 2 | — | 215.3 | Co | 0.015 |
| $Sb_2O_3$:EG[b] | — | 2 | — | 285.5 | Sb | 0.130 |
| Ethylene glycol makeup | — | 2 | 7.6 | — | — | — |

[a]=Raw materials dissolved in ethylene glycol
[b]=$Sb_2O_3$ reacted with EG to yield Sb glycolate

TABLE I
Polyester reactor processing
0.60±0.02 I.V. Feed polymer

B. Esterification (S/1) reaction conditions and procedures

| Elapsed time (min.) | Batch temp.,°C | Oil temp.,°C | Pressure PSI | Head temp.,°C | Procedure |
|---|---|---|---|---|---|
| 0 | 260 | 267 | 10 | 108 | charge TPA |
| 5 | 226 | 257 | 40 | 107 | charge $H_3PO_4$:EG, EG |
| 48 | 256 | 283 | 70 | 129 | |
| 60 | 260 | 288 | 70 | 130 | start temp. program |
| 135 | 284 | 291 | 10 | 108 | transfer to S/2 vessel |

TABLE I
Polyester reactor processing
0.60 dl/g±0.02 I.V. Feed polymer

C. Polycondensation (S/2 and S/3) reaction conditions and procedures

| Elapsed time (min.) | | Batch temp.,°C | Oil temp.,°C | Pressure pascal (Pa) | Agitator RPM | Procedure |
|---|---|---|---|---|---|---|
| S/2 | 142 | 280 | 285 | Atm. | — | charge $Co(C_2H_3O_2)_2 \cdot 4H_2O$:EG |
| | 147 | 262 | 285 | Atm. | — | charge $Sb_2O_3$:EG, start vacuum |
| | 152 | 274 | 285 | $8.6 \times 10^4$ | — | |
| | 193 | 275 | 286 | $2.15 \times 10^3$ | — | transfer to S/3 vessel |
| S3 | 196 | 273 | 283 | $2.6 \times 10^2$ | 73 | |
| | 208 | 281 | 286 | $2.6 \times 10^2$ | 66 | |
| | 242 | 283 | 286 | $1.3 \times 10^2$ | 30 | cut vacuum and pressurize to $55 \times 10^4$ Pa to extrude resin ribbon that is diced into 3.2 mm cubes. |
| | 260 | | | | | end of dicing |

The 0.60 dl/g±0.02 I.V. feed resin is subsequently solid state polymerized to 0.72 dl/g±0.02 IV in a 0.086 m³ blender-dryer reaction vessel using conditions and procedures outlined in Table II.

TABLE II
Polyester solid state polymerization 0.085 m³ blender-dryer 0.72 dl/g±0.02 I.V.

| Elapsed time (hrs.) | Oil temp.,°C | Batch temp.,°C | Procedure |
|---|---|---|---|
| 0 | 190 | — | Charge 15,86 kg of feed resin |
| 1.5 | 190 | 150 | Crystallize at atm. pressure |
| 8.0 | 237 | 226 | Solid state polymerize at 0.2—.3 mm of Hg vac. |
| 10.0 | — | — | Cool resin temp. to 40—50°C and discharge |

EP 0 061 414 B2

TABLE III
Improved appearance PET (polyethylene terephthalate) properties

### Feed resin properties

| Sample | Composition, ppm | | | I.V., dl/gm | $COOH^{Eq}/10^6$ gms | Mettler M.P., °C | Gardner color | | | $CH_3CHO$ Content, ppm |
|---|---|---|---|---|---|---|---|---|---|---|
| | Sb | Co | P | | | | Rd | a | b | |
| 1 | 210 | — | 25* | 0.606 | 17 | 255.1 | 24.0 | −0.5 | 2.4 | 51.5 |
| 2 | 150 | — | — | 0.568 | 22 | 255.8 | 40.0 | −1.2 | 8.9 | 56.9 |
| 3 | 150 | 50 | — | 0.561 | 27 | 256.0 | 20.9 | 5.4 | −8.5 | 80.7 |
| 4 | 150 | 50 | 40 | 0.574 | 14 | 255.5 | 32.1 | −0.1 | −0.3 | 51.9 |
| 5 | 130 | 15 | 15 | 0.572 | 17 | 254.4 | 30.7 | 0.6 | 0.1 | 52.0 |

### Solid state resin properties

| Sample | Sb | Co | P | I.V., dl/gm | $COOH^{Eq}/10^6$ gms | | Rd | a | b | $CH_3CHO$ Content, ppm |
|---|---|---|---|---|---|---|---|---|---|---|
| 1 | 210 | — | 25* | 0.709 | 12 | — | 53.4 | −2.0 | 0.0 | 1.6 |
| 2 | 150 | — | — | 0.715 | 15 | — | 73.1 | −2.4 | 11.9 | 1.1 |
| 3 | 150 | 50 | — | 0.713 | 18 | — | 48.3 | 1.5 | −6.1 | 1.7 |
| 4 | 150 | 50 | 40 | 0.747 | 9 | — | 61.0 | −1.4 | −1.3 | 1.2 |
| 5 | 130 | 15 | 15 | 0.716 | 12 | — | 66.3 | −1.4 | −1.1 | 1.4 |

### $CH_3CHO$ Generation rate (ppm/min.)

| Sample | Sb | Co | P | |
|---|---|---|---|---|
| 1 | 210 | — | 25* | 1.12 |
| 2 | 150 | — | — | 1.13 |
| 3 | 150 | 50 | — | 3.36 |
| 4 | 150 | 50 | 40 | 1.23 |
| 5 | 130 | 15 | 15 | 1.16 |

### Bottle preform properties

| Sample | Sb | Co | P | Hunter values | | |
|---|---|---|---|---|---|---|
| | | | | L | (a) | (b) |
| 1 | 210 | — | 25* | 56.2 | −2.1 | 3.6 |
| 2 | 150 | — | — | 71.4 | −2.8 | 7.1 |
| 3 | 150 | 50 | — | 64.3 | 1.0 | 0.8 |
| 4 | 150 | 50 | 40 | 68.7 | 0.8 | 2.2 |
| 5 | 130 | 15 | 15 | 71.8 | 1.0 | 2.0 |

*Phosphite

TABLE III (continued)
Improved appearance PET properties

| Sample | Composition, ppm | | | Bottle properties (2 liter) | | | | | |
| | Sb | Co | P | Hunter Sidewall | | | Haze | Visual | Headspace $CH_3CHO$ content μg/l (ppb) |
| | | | | L | a | b | | | |
|---|---|---|---|---|---|---|---|---|---|
| 1 | 210 | — | 25* | 86.9 | −0.8 | 1.7 | 3.4 | Bottle hazy and reduced brightness | 2.2 |
| 2 | 150 | — | — | 88.7 | −0.8 | 1.9 | 1.7 | Yellow neck and bottom | 2.6 |
| 3 | 150 | 50 | — | 88.2 | 0.0 | 1.3 | 1.7 | Bluish tinge neck and bottom | 10.2 |
| 4 | 150 | 50 | 40 | 88.0 | +0.2 | 1.4 | 3.6 | Clear neck and bottom | 2.0 |
| 5 | 130 | 15 | 15 | 88.9 | −0.2 | 1.3 | 1.7 | Clear neck and bottom | 2.1 |

*Phosphite

As previously noted, the present invention relates to a polyester which produces an article having a high clarity, a low haze, and neutral hue. Examining Table III, the data sets forth clarity, haze values, and color values, that is neutral hue; with regard to Example 1, a prior art polyester containing antimony and a phosphite; Example 2 relates to a polyester produced merely containing antimony; Example 3 relates to a polyester produced containing only antimony and cobalt; whereas Examples 4 and 5 relate to the present invention. As apparent from the various data such as the feed resins and solid state resin properties, the prior art resin has a reduced brightness value. Example 2 has yellow resin, whereas Example 3 has bluish resin and a reduced brightness. However, Examples 4 and 5 have a neutral color as well as good brightness. Concerning the preform properties, that is an item made from a resin such as a parison, the prior art article has reduced brightness; Example 2 has a yellow color; and Example 3 has a reduced brightness. However, Example 4 and 5 have good brightness and therefore clarity and a neutral hue. Examining now the bottle properties which are taken through the sidewall, it is seen that Example 1 does show a fair amount of haze. The visual inspection also reveals that the bottle is hazy and has reduced brightness. Although Examples 2 and 3 show clear Hunter sidewall values, the visual inspection reveals that the neck and bottom which tend to be thicker are yellow and blue, respectively. Thus, they do not contain a neutral hue. Moreover, Example 3 which contains the cobalt, has an

8

unacceptable amount of acetaldehyde content. In contrast, Examples 4 and 5, both through the instrument readings and visual readings, have clear bottles including the neck and bottom portion and have no haze. The clarity is high and the acetaldehyde levels are low. Thus, it is apparent that the present invention yields a high clarity bright bottle having low haze and a neutral or no color thereto.

## Claims

1. Process of preparing a polyester resin yielding an article of high clarity having a neutral hue containing an antimony compound, a phosphorus compound, and a cobalt compound by the reaction of a dicarboxylic acid and polyhydric alcohol compound, said dicarboxylic acid being selected from the group consisting of alkyl dicarboxylic acids having a total of from 2 to 16 carbon atoms, aryl or alkyl substituted aryl dicarboxylic acids containing a total of from 8 to 16 carbon atoms, and combinations thereof, and wherein said polyhydric alcohol is selected from the group consisting of glycols having from 2 to 12 carbon atoms, glycol ethers having from 4 to 12 carbon atoms, and combinations thereof, characterized by reacting the dicarboxylic acid with polyhydric alcohol in a solvent consisting of a preformed low molecular weight linear condensation polyester,and by adding the phosphorus compound and the cobalt compound prior to adding the antimony compound.

## Patentansprüche

1. Herstellungsverfahren für ein eine Antimonverbindung, eine Phosphorverbindung und eine Kobaltverbindung enthaltendes Polyesterharz, das einen Artikel von hoher Klarheit mit neutraler Tönung ergibt, mittels Reaktion einer Dicarbonsäure und einer polyhydrischen Alkoholverbindung, wobei die genannte Dicarbonsäure aus der Gruppe von Alkyldicarbonsäuren mit insgesamt 2 bis 16 Kohlenstoffatomen, aryl- oder alkylsubstituierten Aryldicarbonsäuren mit insgesamt 6 bis 16 Kohlenstoffatomen und Kombinationen hiervon gewählt wird, während der genannte polyhydrische Alkohol aus der Gruppe von Glycolen mit 2 bis 12 Kohlenstoffatomen, Glycoläthern mit 4 bis 12 Kohlenstoffatomen und Kombinationen hiervon gewählt wird, dadurch gekennzeichnet, daß die Dicarbonsäure in einer Lösung aus zuvor gebildetem Polyester von niedrigem Molgewicht und linearer Kondensation mit polyhydrischem Alkohol zur Reaktion gebracht und zunächst die Phosphorverbindung und die Kobaltverbindung und anschließend die Antimonverbindung zugesetzt wird.

## Revendications

1. Processus de preparation d'une résine polyester produisant un article de grande clarté de teinte neutre contenant un composé de l'antimoine, un composé du phosphore et un composé du cobalt par réaction d'un composé d'acide dicarboxylique et d'alcool polyvalent, l'acide dicarboxylique étant sélectionné dans le groupe des acides dicarboxyliques d'alkyle renfermant entre 2 et 16 atomes de carbone au total, des acides dicarboxyliques d'aryle ou d'aryle substitué par de l'alkyle renfermant entre 8 et 16 atomes de carbone au total et des combinaisons de ces acides et où l'alcool polyvalent est sélectionné dans le groupe des glycols renfermant entre 2 et 12 atomes de carbone, des éthers-glycols renfermant entre 4 et 12 atomes de carbone et des combinaisons de ces produits, caractérisé par la réaction de l'acide dicarboxylique avec l'alcool polyvalent dans un solvant composé d'un polyester préformé à condensation linéaire et faible poids moléculaire et par l'addition du composé du phosphore et du composé du cobalt avant celle du composé de l'antimoine.